# EUROPÄISCHE PATENTSCHRIFT

(11) **EP 3 180 096 B1**
(45) Veröffentlichungstag und Bekanntmachung des Hinweises auf die Patenterteilung: **21.10.2020**
(21) Anmeldenummer: 15767075.3
(22) Anmeldetag: 14.08.2015
(51) Int. Cl.: A63B 71/06, G01C 15/00, B66D 1/38, A63C 19/06, F16M 11/18, F16M 11/04, F16M 13/02

(54) **FREISTOSSABSTANDSPROJIZIERVORRICHTUNG**
FREE KICK DISTANCE PROJECTING DEVICE
DISPOSITIF DE PROJECTION D'UNE DISTANCE DE COUP FRANC

(30) Priorität: 14.08.2014 AT 6322014
(43) Veröffentlichungstag der Anmeldung: 21.06.2017
(73) Patentinhaber: Ganzer, Natalis, 9971 Matrei in Osttirol (AT)
(72) Erfinder: Ganzer, Natalis, 9971 Matrei in Osttirol (AT)
(74) Vertreter: Torggler & Hofinger Patentanwälte
(86) Internationale Anmeldenummer: PCT/AT2015/000108
(87) Internationale Veröffentlichungsnummer: WO 2016/023051

(56) Entgegenhaltungen:
- DE-A1- 10 124 012
- US-A1- 2005 162 257
- US-A1- 2005 183 273

## Beschreibung

Die Erfindung betrifft allgemein eine Vorrichtung zum Darstellen einer Markierung, insbesondere einer Linie bzw. eines Abstands, auf einem Spielfeld einer Sportanlage.

Generell gibt es bei den meisten Sportarten schon seit jeher die Notwendigkeit, das Spiel zu reglementieren um es fairer spielen zu können. Ein wesentliches Merkmal dabei ist, das Spielfeld zu begrenzen. Dafür werden auf der Oberfläche des Spielfelds Linien gezogen oder sonstige Markierungen vor dem Spiel entsprechend aufgebracht.

Eine Variante um ein und dieselbe Oberfläche einfach mit Begrenzungen für unterschiedliche Sportarten zu versehen, geht aus der EP 0 423 218 B1 hervor. Dies erfolgt dadurch, dass Markierungslinien mittels eines Lasers auf die Spieloberfläche projiziert werden. Somit definieren diese projizierten Linien zeitlich begrenzt die Spielfeldmarkierungen auf einer ansonsten unmarkierten Oberfläche und es kann schnell zwischen unterschiedlichen Sportarten gewechselt werden.

Darüber hinaus halten in vielen Sportarten immer mehr technische Hilfsmittel Einzug, um das Spiel fairer, attraktiver, übersichtlicher, schneller und spannender zu gestalten. Auch immer mehr Analysemöglichkeiten für Zuschauer, Trainer und Spieler nach dem Spiel werden angewendet. Auch Hilfsmittel für Schiedsrichter kommen immer öfter zur Anwendung.

Ein Beispiel für eine derartige Überwachungsvorrichtung für ein Spielfeld geht aus der DE 10 2006 020 018 A1 hervor. Hierin geht es vor allem darum, Schiedsrichter bei ihrer Entscheidungsfindung bezüglich der Regeleinhaltung zeitnah auf Grundlage objektiver Tatbestände zu informieren, die deren Entscheidungen aber nicht in Frage stellt. Dazu werden Spielfeldpunkte berechnet, eine Bedieneinheit zur Verfügung gestellt, eine Kameraeinheit mitsamt einer Steuer- und Auswerteinheit verwendet und eine Anzeigeeinheit zur Wiedergabe des Spielgeschehens benutzt, sodass die jeweilige Spielsituation reproduzierbar, auswertbar und über die Anzeigeeinheit darstellbar und einer Analyse zuführbar ist.

Ein ähnliches System wird in der DE 10 2007 049 147 A1 beschrieben, in der es um die Verwendung eines Sensorsystems zum Erfassen von Bewegungsabläufen von Personen, Sportgeräten und Spielsituationen beim Sport geht. Hierzu sind Sensorvorrichtungen in Form von PMD-Sensoren vorgesehen. Jeder Sensorvorrichtung kann dabei eine Kamera zugeordnet sein. Das Sensorsystem ist demnach derart ausgebildet, dass Objekten, die mit Hilfe der Kamera abgebildet werden, entsprechende von der zugeordneten Sensorvorrichtung erfasste Abstandsinformationen zugeordnet werden. Beispielsweise stellt dann eine Auswerteeinheit anhand von vordefinierten Algorithmen fest, ob ein Regelverstoß stattgefunden hat, also ob der Ball eine Seitenauslinie oder eine der Torauslinien passiert hat oder ob ein Spieler zum Zeitpunkt der Ballabgabe im Abseits stand. Ferner kann eine Auswertung dahingehend erfolgen, dass festgestellt wird, ob der Ball die Torlinie passiert hat oder nicht.

Letztgenannte Variante mit der Anzeige ob ein Tor gefallen ist oder nicht wurde bei der Fußballweltmeisterschaft 2014 erstmals in großem Rahmen unter dem Namen "Goal Control" erfolgreich eingesetzt.

Um aber nicht erst im Nachhinein eine Überprüfung oder eine Kontrolle zu ermöglichen, sondern bereits während dem Spielgeschehen technische Hilfsmittel einzusetzen, sind aus einigen Sportarten bereits diverse Hilfssysteme bekannt.

So zeigt die US 4,090,708 eine Möglichkeit, um bei einem Football-Spiel die relevantesten Abstandslinien ("first down line" und "line of scrimmage") per Laser auf das Feld zu projizieren. Dafür werden Laser auf neben dem Spielfeld angebrachten Führungsschienen bewegt, wobei durch die Laser während des Spiels die entsprechenden Linien quer über das Spielfeld angezeigt werden.

Mit der Fußballweltmeisterschaft 2014 hat sich ein weiteres Hilfsmittel zur Anwendung während eines Fußballspiels durchgesetzt, nämlich der sogenannte "Freistoßspray". Mithilfe dieses Sprays kann der Schiedsrichter während des Spiels bei einem Freistoß die Position des Balles für jeden Spieler ersichtlich markieren und ebenso den nötigen Freistoßabstand von 9,15 m zum Ball auf das Spielfeld sprühen, sodass die gegnerische Mannschaft die Mauer in der richtigen Entfernung zum Ball aufstellt. Dadurch wird die Fairness erhöht und auch das Einhalten des notwendigen Abstandes erfolgt meist schneller als mit reinem Zurückdrängen durch den Schiedsrichter. Ein Beispiel für die genaue Zusammensetzung und Verwendung eines derartigen Sprays geht aus der DE 601 06 410 T2 hervor.

Dieses seit kurzem eingeführte System hat sich zwar bereits bewährt, weist aber dennoch Nachteile auf. So basiert der aufgesprühte Abstand immer noch auf den Vorgaben des Schiedsrichters und kann daher erheblich von den regelkonformen 9,15 m abweichen. Zudem gilt dieser Abstand ja rund um den Fußball, der Abstand wird aber meist nur in einem Richtung Fußballtor weisenden Bereich aufgesprüht. So kann es vorkommen, dass ein Spieler, der sich neben der Mauer und neben der aufgesprühten Linie befindet, deutlich näher am Fußball steht als erlaubt. Somit kann dieser Spieler zum Beispiel im Falle eines kurz abgespielten Freistoßes unerlaubterweise viel schneller am Ball und am Gegenspieler sein.

Die Erfindung betrifft daher eine Vorrichtung zum Darstellen einer Markierung in Form eines einzuhaltenden Abstands zwischen einem Spielgerät, insbesondere einem Fußball, und Spielteilnehmern auf einem Spielfeld einer Sportanlage, mit einer Anzeigevorrichtung zum Projizieren von - die Markierung repräsentierenden - Lichtstrahlen auf das Spielfeld, wobei die projizierten Lichtstrahlen den einzuhaltenden Abstand anzeigen und zumindest bereichsweise kreisförmig, insbesondere in einem Abstand von 9,15 m, um das Spielgerät auf das Spielfeld projizierbar sind. Weiters betrifft die Erfindung ein Verfahren zum Projizieren einer solchen Markierung auf ein Spielfeld.

Mit einer derartigen Anzeigevorrichtung kann somit rund um den Ball der exakte Abstand eines Spielteilnehmers zum Ball dargestellt werden, womit die Nachteile des "Freistoßsprays" behoben sind. Eine derartige Vorrichtung zum Erstellen von Markierungen auf einem Spielfeld geht aus der DE 101 24 012 A1 hervor. Dabei ist ein Laser oder eine Lichtquelle vorgesehen, wobei durch die entsprechenden Strahlen die Markierungen auf dem Spielfeld erzeugbar sind. Diese Vorrichtung ist durch eine Fernbedienung bedienbar und durch einen Strahl wird eine Kreislinie um den mit der Fernbedienung bestimmten Punkt mit einem vorbestimmten Radius auf dem Spielfeld erzeugt. Diese Vorrichtung ist oberhalb des Spielfeldes insbesondere am Tribünendach und/oder an einem Mast wie einem Flutlichtmast befestigt. Von dieser stationären Vorrichtung werden die Laserstrahlen über ein Linsensystem gebündelt und auf das Spielfeld ausgerichtet. Es können auch mehrere solcher Vorrichtungen vorgesehen sein.

Ein ganz ähnliches System geht aus der US 2005/0162257 A1 hervor. Ebenfalls von einem Stadiondach oder von Masten wird ein Laserlichtstrahl auf das Spielfeld projiziert, um den erforderlichen Freistoßabstand anzuzeigen. Dieses System kann über die Pfeife des Schiedsrichters aktiviert werden. Es wird angeführt, dass ein "spot light"-Mechanismus automatisch auf die Position des Balles fokussiert. Die genaue Ausgestaltung wird aber nicht erwähnt.

Nachteilig bei diesen Systemen ist, dass nicht garantiert werden kann, dass die gewünschte Markierung zur Gänze angezeigt wird, da Spielteilnehmer im Weg sein können. Vor allem wenn die Lichtquelle an einem Mast oder am Stadiondach hinter der Mauer angebracht ist, kann die Markierung nicht vor der Mauer angezeigt werden. Dieses Problem könnte verhindert werden, indem mehrere Lichtquellen aus unterschiedlichen Winkeln auf das Spielfeld gerichtet werden, was aber zu einem erheblichen Mehraufwand und zu einer Vervielfachung der notwendigen Komponenten führt. Zudem ist in jedem Fall der Nachteil gegeben, dass der Abstand zum Spielfeld je nach Stadionhöhe und -breite sehr groß ist, weshalb starke und somit kostenintensive Laser eingesetzt werden müssen, um die Markierung ausreichend sichtbar anzeigen zu können. Weiters kann die Ballposition oftmals nicht mit Sicherheit bestimmt werden, vor allem wenn der Ball für die relativ weit entfernte Fernbedienung oder für den "spot light"-Mechanismus verdeckt ist. Somit kann nicht immer garantiert werden, dass das System überhaupt "weiß" bzw. erkennen kann, wo sich der Ball gerade befindet.

Aus der US 2005/0183273 A1 ist es bekannt, dass die Anzeigevorrichtung mit einer oberhalb der Sportanlage bewegbaren Transportvorrichtung mitbewegbar ist. Hierin geht es aber lediglich um die Darstellung von Linien beim American Football. Die Position des Spielgeräts ist hier an sich irrelevant und muss für die Darstellung der Linien nicht berücksichtigt werden.

Die Aufgabe der vorliegenden Erfindung besteht daher darin, eine gegenüber dem Stand der Technik verbesserte Vorrichtung und ein verbessertes Verfahren zu schaffen. Insbesondere soll die Vorrichtung zum Darstellen einer Markierung auf einem Spielfeld einer Sportanlage einfach bedienbar, konstruktiv einfach aufgebaut, kostengünstig herstellbar und flexibel einsetzbar sein.

Dies wird durch eine Vorrichtung mit den Merkmalen von Anspruch 1 gelöst. Demnach ist erfindungsgemäß unter anderem eine Erfassungseinrichtung zum Erfassen der Position eines Spielgeräts auf dem Spielfeld vorgesehen. Diese Erfassung kann dabei dadurch erfolgen, dass im oder am Spielgerät ein Sender angebracht und irgendwo bei oder oberhalb der Sportanlage ein entsprechender Empfänger vorgesehen ist. Bevorzugt ist allerdings vorgesehen, dass mit der Erfassungseinrichtung die Distanz der Anzeigevorrichtung zum Spielgerät und/oder die Distanz der Anzeigevorrichtung zum Spielfeld erfassbar sind/ist. Somit muss im oder am Spielgerät kein Sender vorhanden sein.

Die Transportvorrichtung kann eigens zum Transportieren der Anzeigevorrichtung konzipiert sein und nur dafür verwendet werden. Somit kann eine individuelle und schnelle Anzeige des gewünschten bzw. vom Schiedsrichter angeforderten Abstands erfolgen. Durch die Bewegbarkeit kann die Anzeigevorrichtung auch immer optimal positioniert werden. Bevorzugt ist die Anzeigevorrichtung an der Transportvorrichtung, vorzugsweise lösbar, befestigt ist.

Prinzipiell ist es möglich, dass die Transportvorrichtung selbständig fliegt. Die Transportvorrichtung kann also beispielsweise als unbemanntes Luftfahrzeug, vorzugsweise in Form einer Drohne, ausgebildet sein. Besonders bevorzugt ist allerdings vorgesehen, dass an der Transportvorrichtung auch eine Kamera zum Filmen eines Fußballspiels auf dem Spielfald (Fußballstadtion), vorzugsweise lösbar, befestigt ist, wobei die Transportvorrichtung und die Kamera ein Kamerasystem bilden und die Anzeigevorrichtung mit diesem Kamerasystem mitbewegbar ist. Damit ist der Vorteil gegeben, dass die ohnehin in immer mehr Stadien eingesetzten, oberhalb des Spielfelds "schwebenden" bzw. "fliegenden" Kamerasysteme als Bewegungsvorrichtung für die Anzeigevorrichtung eingesetzt werden. Das heißt, es muss nur eine einzige Anzeigevorrichtung vorhanden sein. Zudem kann die Anzeigevorrichtung sehr nah (z. B. 3 Meter) zum zu markierenden Bereich hinbewegt werden. Darüber hinaus kann die Anzeigevorrichtung immer vor der Mauer positioniert werden, wodurch kein Spielteilnehmer bei regelkonformem Abstand die Lichtstrahlen vor Erreichen der Spielfeldoberfläche unterbricht.

Erfindungsgemäß weist die Vorrichtung eine Anzeige-Steuervorrichtung auf, welche einen Anzeigemodus aufweist, in dem die Anzeigevorrichtung zur Projektion der Markierung auf das Spielfeld ansteuerbar ist.

Zur Erläuterung des konkreten Schutzbereichs sei angemerkt, dass die Transportvorrichtung nicht zwingend Teil der im Hauptanspruch beanspruchten Vorrichtung sein muss. Vielmehr kann die erfindungsgemäße Vorrichtung bei einer bestehenden Transportvorrichtung (vor allem bei bestehenden Kamerasystemen) nachgerüstet werden. Dabei ist dann die Anzeigevorrichtung mit dieser Transportvorrichtung (bzw. mit diesem Kamerasystem) mitbewegbar und die Anzeige-Steuervorrichtung weist eine geeignete elektronische Schnittstelle zu einer (Kamerasystem-)Steuervorrichtung auf. Diese rechnerisch-logische Verbindung der beiden Steuervorrichtungen über die Schnittstelle ist vor allem zur Ermittlung der Transportvorrichtungs- und somit der Anzeigevorrichtungsposition wichtig. Zudem werden die Bewegungsdaten verknüpft. Wenn im Folgenden vom "Kamerasystem" die Rede ist, dann soll das jeweilige Merkmal bzw. der jeweilige Vorteil - sofern logisch und sinnvoll - immer auch für die reine Transportvorrichtung ohne Kamera gelten.

Erfindungsgemäß ist vorgesehen, dass die Anzeige-Steuervorrichtung einen Bewegungsmodus aufweist, in welchem die Bewegung der Transportvorrichtung, vorzugsweise des gesamten Kamerasystems, oberhalb des Spielfelds steuerbar ist. Das heißt, die Anzeige-Steuervorrichtung übernimmt sozusagen das Kommando über die räumliche Bewegung des Kamerasystems und mithin der Anzeigevorrichtung oberhalb des Spielfelds.

Natürlich kann eine Anzeigevorrichtung nicht nur bei einem bestehenden System nachgerüstet werden. Vielmehr kann gemäß einem bevorzugten Ausführungsbeispiel auch die Transportvorrichtung bzw. das gesamte Kamerasystem Teil der Vorrichtung sein. Dabei ist bevorzugt vorgesehen, dass das Kamerasystem eine Kamerasystem-Steuervorrichtung aufweist. Gemäß diesem Ausführungsbeispiel sind also die Anzeigevorrichtung, die Transportvorrichtung und die zugehörige Steuerung - ohne die Kamera - Teil des Lieferumfangs. Bevorzugt ist die Anzeigevorrichtung dabei an der Transportvorrichtung befestigt. Zudem kann vorgesehen sein, dass die Transportvorrichtung eine Tragevorrichtung für die Kamera, zumindest zwei, vorzugsweise vier, an der Tragvorrichtung befestigte Seile, oberhalb des Spielfelds, vorzugsweise an einem Stadiondach, befestigte Führungsrollen für die Seile und Antriebsvorrichtungen für die Seile aufweist.

Grundsätzlich kann die Kamera des Kamerasystems erst im Stadion vom übertragenden Fernsehsender auf die vorinstallierte Transportvorrichtung montiert werden. Besonders bevorzugt ist aber nicht nur die Transportvorrichtung sondern auch eine oberhalb des Spielfelds von der Transportvorrichtung bewegbare Kamera Teil der Vorrichtung. Diese Kamera ist signaltechnisch ebenfalls mit der Kamerasystem-Steuervorrichtung verbunden.

Beispiele für komplette Kamerasysteme sind aus dem Stand der Technik bereits bekannt. Zum Beispiel zeigt die US 4,710,819 eine Aufhängvorrichtung für eine Kamera bei einer Fernsehübertragung eines NFL-Football-Spiels. Anstatt der Kamera kann auch ein Laser von dieser Aufhängvorrichtung transportiert werden. Die WO 01/77571 A1 zeigt eine Seilzug-Einrichtung für eine Führung einer Kamera im Abstand über einer Basisstrecke. Die WO 2011/079122 A1 zeigt ein Bewegungssystem für eine Kamera oberhalb eines Spielfelds. Hierbei kann ein Laser zur Kalibrierung des gesamten Systems eingesetzt werden. Die US 8,199,197 B2 zeigt auch ein in der Luft bewegbares Kamerasystem mit einer Sicherheitsvorrichtung. Ein Laser kann zur Positionserkennung eingesetzt werden. Die WO 2007/030665 A2 zeigt ein oberhalb eines Spielfelds in einer Halle bewegbares Kamerasystem. An diesem Kamerasystem ist auch ein Werbemedium beispielsweise in Form eines Projektors angebracht, mit welchem Werbebilder im Bereich des Veranstaltungsorts projiziert werden können.

Für die genaue Positionierung bzw. Anbringung der Anzeigevorrichtung ist bevorzugt vorgesehen, dass die Anzeigevorrichtung direkt an der Kamera oder indirekt an der die Kamera bewegenden Transportvorrichtung befestigt ist. Die Anzeigevorrichtung kann dabei zum Beispiel mit der Tragevorrichtung der Transportvorrichtung fest verschweißt sein. Bevorzugt ist die Anzeigevorrichtung lösbar, zum Beispiel über Schrauben oder über ein Klippsystem, befestigt.

Um wenig Änderungen in bisher bereits eingesetzten Systemen zu verursachen, ist bevorzugt vorgesehen, dass die Kamerasystem-Steuervorrichtung einerseits einen Aufnahmemodus aufweist, in welchem das von der Kamera durchgeführte Filmen steuerbar ist, und andererseits einen Bewegungsmodus aufweist, in welchem die Bewegung der Transportvorrichtung steuerbar ist. Das heißt, der Bewegungsmodus muss nicht Teil der Anzeige-Steuervorrichtung sein. Vielmehr kann aber der Bewegungsmodus von der Anzeige-Steuervorrichtung aufgerufen werden. Im Aufnahmemodus werden sämtliche kameraspezifischen Funktionen wie zum Beispiel Zoomen angesteuert. Im Aufnahmemodus werden auch von der Kamera relativ zur Transportvorrichtung durchgeführte Bewegungen gesteuert. Die generelle räumliche Bewegung über die Transportvorrichtung wird in diesem Aufnahmemodus aber nicht gesteuert. Somit verliert der Regisseur der Fernsehübertragung bei im Anzeigemodus befindlicher Anzeigevorrichtung nicht gänzlich die Kontrolle über die Kamera. Vielmehr kann der Regisseur bzw. ein Mitarbeiter immer noch die Kamera selbst und die Relativbewegungen der Kamera zur Transportvorrichtung steuern, er kann aber nicht mehr die räumliche Bewegung der Kamera über die Transportvorrichtung steuern. Dies obliegt im Anzeigemodus dem Bediener (insbesondere nur dem Schiedsrichter) der Anzeigevorrichtung bzw. dessen Anzeige-Steuervorrichtung. Im Anzeigemodus übernimmt somit die Anzeige-Steuervorrichtung das Kommando über den Bewegungsmodus.

Besonders bevorzugt ist zusätzlich zur Anzeigevorrichtung auch die Erfassungseinrichtung am Kamerasystem befestigt bzw. mit diesem mitbewegbar. Die Anzeigevorrichtung und die Erfassungseinrichtung können auch in eine Baueinheit integriert sein. Hierzu kann zur Vereinfachung darüber hinaus vorgesehen sein, dass mit der Anzeige-Steuervorrichtung auch die Erfassungseinrichtung steuerbar ist.

Die Erfassungseinrichtung ermöglicht es erfindungsgemäß, dass im Anzeigemodus über die Anzeigevorrichtung die Lichtstrahlen in Abhängigkeit der über die Erfassungseinrichtung erfassten Position des Spielgeräts auf das Spielfeld projizierbar sind.

In gleicher Art und Weise ermöglicht es die Erfassungseinrichtung erfindungsgemäß auch, dass im Bewegungsmodus über die Transportvorrichtung die an der Kamera oder an der Tragevorrichtung der Transportvorrichtung befestigte Anzeigevorrichtung in Abhängigkeit der erfassten Position des Spielgeräts bewegbar ist.

Prinzipiell soll nicht ausgeschlossen sein, dass die erfindungsgemäße Vorrichtung zusätzlich auch zum Darstellen von Bildern, Zeichen, Grafiken oder sonstigem auf dem Spielfeld eingesetzt wird. Bevorzugt ist allerdings vorgesehen, dass durch die Anzeigevorrichtung nur eine Markierung in Form eines einzuhaltenden Abstands auf dem Spielfeld angezeigt wird, wobei die Lichtstrahlen zumindest bereichsweise kreisförmig (zum Beispiel nur in einem Halbkreis oder Viertelkreis) in einem Abstand von 9,15 m um das Spielgerät auf das Spielfeld projizierbar sind. Dieses einstellbare oder vorgegebene Abstandsmaß der zu projizierenden Markierung kann bevorzugt in einem Speicher der Anzeige-Steuervorrichtung hinterlegt bzw. gespeichert sein.

Gemäß einem weiteren bevorzugten Ausführungsbeispiel weist die Vorrichtung eine Bedieneinheit für die Anzeigevorrichtung auf. Diese kann beispielsweise als Computer oder in Form eines Tablet-Computers ausgebildet sein. Vorzugsweise ist die Bedieneinheit als einfache Fernbedienung zum Bedienen der Vorrichtung ausgebildet. Diese Fernbedienung kann von einer eigens dafür abgestellten Person bedient werden. Zum Beispiel kann dies der vierte Offizielle (Schiedsrichterassistent) sein, der bei einem Fußballspiel an der Seitenlinie diverse Aufgaben übernimmt. So kann dieser auf Anweisung des Schiedsrichters (z. B. über einen Kopfhöher) oder selbständig bestimmen, wann die Anzeigevorrichtung in den Anzeigemodus geschaltet wird.

Bevorzugt ist allerdings vorgesehen, dass die Fernbedienung vom Schiedsrichter selbst bedient wird. Dies hat mehrere Vorteile. Zum Beispiel kann die Fernbedienung selbst einen Positionssender aufweisen, über welchen die Position der Fernbedienung auf der Sportanlage an die Erfassungseinrichtung signaltechnisch übertragbar ist oder von der Erfassungseinrichtung erfassbar ist. Somit muss die Erfassungseinrichtung nicht direkt und mit einem zusätzlichen aufwändigen System die Position des Spielgeräts erfassen. Vielmehr kann der Schiedsrichter - im Moment wenn er das Spielgerät auf die von ihm bestimmte Stelle legt - auf einen Startknopf auf der Fernbedienung drücken. Bevorzugt sollte der Schiedsrichter in diesem Moment die Fernbedienung genau auf dem Spielgerät platzieren, wodurch die Erfassungseinrichtung gleichzeitig die Position der Fernbedienung und damit auch die Position des Spielgeräts kennt. Sodann können sämtliche Aktionen in Gang gesetzt werden: Die Anzeige-Steuervorrichtung übernimmt den Bewegungsmodus des Kamerasystems, die Transportvorrichtung bewegt die Kamera mitsamt Anzeigevorrichtung oberhalb der mit der Fernbedienung erfassten Position und die Markierung wird über die Anzeigevorrichtung auf das Spielfeld um das Spielgerät herum projiziert. Anders ausgedrückt ist, vorzugsweise nur, über die Fernbedienung die Position des Spielgeräts auf dem Spielfeld erfassbar ist, indem die Fernbedienung auf dem Spielgerät positioniert ist und gleichzeitig durch den Schiedsrichter ein Knopf auf der Fernbedienung gedrückt wird, sodass die an die Erfassungseinrichtung übertragene Position der Fernbedienung der Position des Spielgeräts entspricht.

Um keine unerwünschten Bewegungen der Anzeigevorrichtung im Anzeigemodus zuzulassen, ist bevorzugt vorgesehen, dass über die Fernbedienung der Anzeigemodus und der Bewegungsmodus aktivierbar sind, wobei bei aktiviertem Anzeigemodus und aktiviertem Bewegungsmodus die Bewegungen der Transportvorrichtung des Kamerasystems nur über die Fernbedienung oder über die Anzeige-Steuervorrichtung steuerbar sind.

Schutz wird auch begehrt für ein Verfahren mit den Merkmalen von Anspruch 11. Demnach sind als wesentliche Schritt das Anbringen einer Anzeigevorrichtung an einer oberhalb des Spielfelds bewegbaren Transportvorrichtung und das Projizieren der die Markierung repräsentierenden Lichtstrahlen durch die an der Transportvorrichtung angebrachte Anzeigevorrichtung zumindest bereichsweise kreisförmig um das Spielgerät auf das Spielfeld vorgesehen, wobei vor dem Projizieren noch die Position des Spielgeräts mittels einer Erfassungseinrichtung erfasst wird. Dies erfolgt besonders bevorzugt durch die Schritte Positionieren einer Fernbedienung durch einen Schiedsrichter auf dem Spielgerät, Drücken auf einen Knopf der Fernbedienung, wenn die Fernbedienung auf dem Spielgerät positioniert ist, und durch Drücken des Knopfes ausgelöstes Übertragen der Position der Fernbedienung über einen die Erfassungseinrichtung mitbildenden Positionssender der Fernbedienung an einen Empfänger der Erfassungseinrichtung, wobei die übertragene Position der Fernbedienung der Position des Spielgeräts entspricht.

Besonders bevorzugt sind bei diesem Verfahren die weiteren Schritte Bewegen des Kamerasystems mitsamt der Anzeigevorrichtung in eine Position im Wesentlichen senkrecht oberhalb des Spielgeräts, Ermitteln der Distanz zwischen der Anzeigevorrichtung und dem Spielgerät, Berechnen das Abstrahlwinkels der Lichtstrahlen in Abhängigkeit der erfassten Distanz und Projizieren der Markierung in einem Abstand von 9,15 m um das Spielgerät auf die Sportanlage vorgesehen. Die Distanzermittlung und Winkelberechnung kann entfallen, wenn die räumliche Höhe der Anzeigevorrichtung im Anzeigemodus voreingestellt ist. So kann zum Beispiel eingestellt werden, dass im Anzeigemodus das Kamerasystem und somit die Anzeigevorrichtung immer auf dieselbe Höhe (z. B. 10 m oberhalb des Spielgeräts) bewegt wird. Somit sind die Distanz und der Abstrahlwinkel immer dieselben. Der Abstrahlwinkel kann daher vorprogrammiert werden. Auch die Positionserkennung des Spielgeräts an sich muss nicht über eine eigenständige Erfassungseinrichtung erfolgen. Vielmehr genügt - wie bereits erwähnt - wenn in der Fernbedienung ein Sender vorgesehen ist, der mit irgendeinem irgendwo bei der Sportanlage angeordneten Empfänger - der in signaltechnischer Verbindung mit der Anzeige-Steuervorrichtung steht - die Erfassungseinrichtung bildet.

Schutz wird darüber hinaus auch noch für die Verwendung einer oberhalb eines Spielfelds einer Sportanlage angeordneten, bewegbaren Transportvorrichtung für das Anbringen einer Anzeigevorrichtung zum Projizieren von - einer einzuhaltenden Markierung repräsentierenden - Lichtstrahlen auf das Spielfeld der Sportanlage begehrt, wobei die projizierten Lichtstrahlen zumindest bereichsweise kreisförmig, insbesondere in einem Abstand von 9,15 m, um ein Spielgerät auf das Spielfeld projizierbar sind, wobei eine Erfassungseinrichtung zum Erfassen der Position eines Spielgeräts auf dem Spielfeld vorgesehen ist.

Weitere Einzelheiten und Vorteile der vorliegenden Erfindung werden anhand der Figurenbeschreibung unter Bezugnahme auf das in der einzigen Zeichnung dargestellte Ausführungsbeispiel im Folgenden näher erläutert:

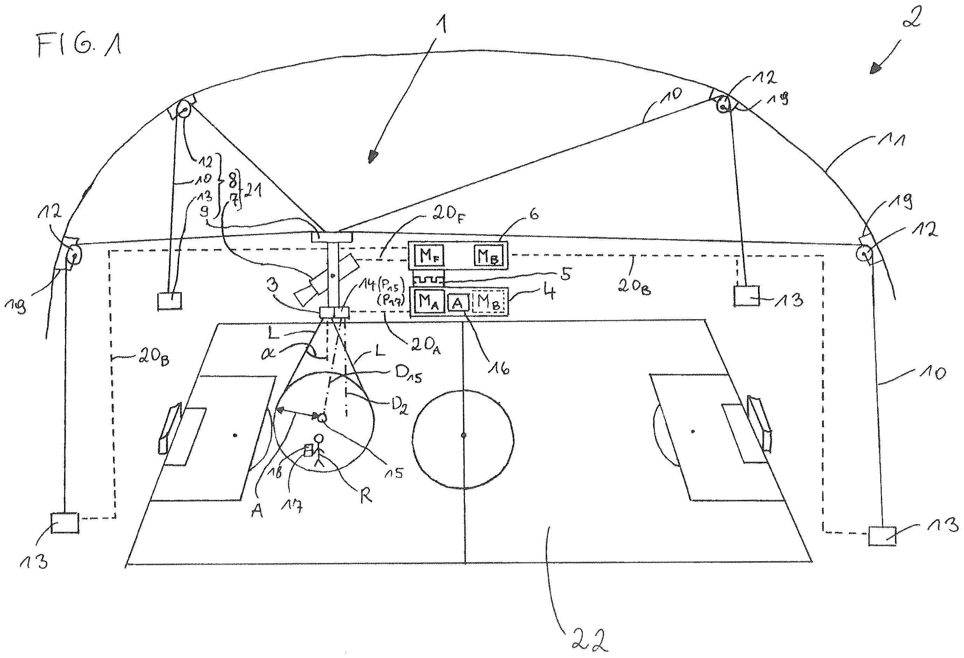

Fig. 1 zeigt schematisch eine Sportanlage 2 mit einer Vorrichtung 1 zum Darstellen einer Markierung A auf einem Spielfeld 22 der Sportanlage 2. Konkret ist eine Sportanlage 2 in Form eines Fußballstadions mit einem Stadiondach 11 dargestellt.

Wie seit einigen Jahren vermehrt in großen Stadien im Einsatz, ist auch in Fig. 1 schematisch ein "fliegendes" Kamerasystem 21 dargestellt. Dieses Kamerasystem 21 weist eine Kamera 7 auf, welche wiederum von einer Transportvorrichtung 8 oberhalb des Spielfelds 22 räumlich bewegbar ist. Die Transportvorrichtung 8 umfasst dabei im Wesentlichen die Tragevorrichtung 9 für die Kamera 7, zumindest drei, vorzugsweise zumindest vier, an der Tragevorrichtung 9 befestigte Seile 10 und die Antriebsvorrichtungen 13 (z. B. in Form von motorisch betriebenen Seilrollen) für die Seile 10. Prinzipiell können diese Antriebsvorrichtungen 10 auch am Stadiondach 11 angeordnet sein. Bevorzugt sind sie allerdings irgendwo seitlich des Spielfelds 22 platziert und die Seile 10 sind über Führungsrollen 12 geführt. Konkret kann jede Führungsrolle 12 über eine Haltevorrichtung 19 am Stadiondach 11 befestigt sein.

Natürlich können auch vom Stadiondach 11 separate Steher für die Führungsrollen 12 vorgesehen sein.

Für die Steuerung dieses Kamerasystems 21 kann eine an sich bekannte Kamerasystem-Steuervorrichtung 6 eingesetzt werden. Diese kann zum Beispiel als ein entsprechendes Programm auf einem Computer gespeichert sein. Dieser Computer dient dann als Bedieneinheit für das Kamerasystem 21. Vorzugsweise bedient ein dem Fußballübertragungsregisseur unterstehender Mitarbeiter dieses Kamerasystem 21. Die Kamerasystem-Steuervorrichtung 6 weist zwei logische Komponenten in Form von Betriebsmodi auf. Ein solcher Modus ist der Aufnahmemodus M_{F}, in welchem die Bewegungen der Kamera 7 relativ zur Transportvorrichtung 8 und die kameraspezifischen Funktionen (Zoomen, Fokussierung, usw.) gesteuert werden. Von der Kamerasystem-Steuervorrichtung 6 werden dabei entsprechende Signale 20_{F} an die Kamera 7 bzw. an eine die Kamera 7 relativ zur Tragevorrichtung 9 bewegende, nicht dargestellte Antriebsvorrichtung ausgegeben. Zudem ist ein Bewegungsmodus M_{B} logischer Bestandteil der Kamerasystem-Steuervorrichtung 6, wobei im Bewegungsmodus M_{B} die räumliche Bewegung der Kamera 7 durch die Transportvorrichtung 8 oberhalb des Spielfelds 22 Sportanlage 2 gesteuert wird. Von der Kamera-Steuervorrichtung 6 werden dabei entsprechende Signale 20_{B} an die Antriebsvorrichtungen 13 ausgegeben. Für die räumliche Bewegung ist in der Kamerasystem-Steuervorrichtung 6 ein den Raum oberhalb des Spielfelds 22 repräsentierendes dreidimensionales Koordinatensystem hinterlegt.

Erfindungsgemäß ist nun eine Anzeigevorrichtung 3 mit dieser oberhalb des Spielfelds 22 bewegbaren Transportvorrichtung 8 mitbewegbar, vorzugsweise an diesem lösbar befestigbar. Um ein Nachrüsten dieser Anzeigevorrichtung 3 bei einer bestehenden Transportvorrichtung 8 (bzw. bei einem bestehenden Kamerasystem 21) zu ermöglichen, weist die Vorrichtung 1 eine Anzeige-Steuervorrichtung 4 mitsamt einer Schnittstelle 5 zur Kamerasystem-Steuervorrichtung 6 auf. Von der Anzeigevorrichtung 3 sind Lichtstrahlen L bzw. Laserstrahlen auf die Oberfläche des Spielfelds 22 projizierbar. Konkret projizieren diese Lichtstrahlen L einen Kreis oder Teilkreis auf die Sportanlage 2, der eine Markierung A in Form eines Abstands um ein Sportgerät 15 (Fußball) anzeigt. Dieser Abstand beträgt 9,15 m und zeigt an, wie weit sich ein gegnerischer Spielteilnehmer bei einem Freistoß dem Spielgerät 15 nähern darf. Während eines Fußballspiels kann dieses neue System wie folgt angewendet werden:
Vor einem Fußballspiel wird - wenn die Anzeigevorrichtung 3 nachgerüstet wird - die Anzeigevorrichtung 3 lösbar am Kamerasystem 21, vorzugsweise an der Tragevorrichtung 9 der Transportvorrichtung 8 der Kamera 7, befestigt. Zudem wird die Anzeige-Steuervorrichtung 4 über die Schnittstelle 5 mit der Kamerasystem-Steuervorrichtung 6 signaltechnisch verbunden.

Wenn die Anzeigevorrichtung 3 schon Teil des Kamerasystems 21 ist und nicht nachgerüstet wird, kann die Anzeige-Steuervorrichtung 4 gleich in die Kamerasystem-Steuervorrichtung 6 integriert sein. Mithin bilden diese Steuervorrichtungen 4 und 6 eine logische Steuereinheit. Es ist dann aber immer noch eine interne rechnerisch-logische Schnittstelle 5 zwischen der Anzeige-Steuervorrichtung 4 und der Kamera-Steuervorrichtung 6 vorhanden, um eine Verknüpfung und einen Datenaustausch (Positionsdaten des Kamerasystems 21 im Koordinatensystem) vor allem während des Anzeigemodus M_{A} zu ermöglichen.

Unabhängig davon, ob die Anzeigevorrichtung 3 nachgerüstet wurde, ist die Anzeigevorrichtung 3 - während das Fußballspiel auf dem Spielfeld 22 läuft - im Normalfall inaktiv. Die Anzeigevorrichtung 3 bewegt sich aber immer mit dem Kamerasystem 21 mit. Die räumliche Bewegung der Kamera 7 wird von der Transportvorrichtung 8 durchgeführt. Diese Bewegung wird über den Bewegungsmodus M_{B} der Kamerasystem-Steuervorrichtung 6 gesteuert. Prinzipiell kann dieser Bewegungsmodus M_{B} auch Teil der Anzeige-Steuervorrichtung 4 sein, was durch die Strichlierung angedeutet ist. Im Bewegungsmodus M_{B} werden entsprechende Signale 20_{B} an die Antriebsvorrichtungen 13 der Transportvorrichtung 8 ausgegeben. Während des Fußballspiels wird das Filmen mit der Kamera 7 über den Aufnahmemodus M_{F} der Kamera-Steuervorrichtung 6 gesteuert. Dessen Bedienung obliegt vornehmlich einem Mitarbeiter des übertragenden Fernsehsenders.

Wird nun während des Fußballspiels vom Schiedsrichter R ein Freistoß gepfiffen, so kommt vor allem bei einem Freistoß in Tornähe die Anzeigevorrichtung 3 zum Einsatz. Diese Anzeigevorrichtung 3 wird dazu über eine Fernbedienung 17 aktiv geschaltet. Dies kann durch eine eigens dafür abgestellte Person erfolgen. Am einfachsten erfolgt dies dadurch, dass der Schiedsrichter R selbst die Fernbedienung 17 bei sich trägt und die Anzeigevorrichtung 3 aktiv schaltet, das heißt in den Anzeigemodus M_{A} schaltet.

Ab diesem Moment verfügt die mit der Fernbedienung 17 (zum Beispiel über Funk) in signaltechnischer Verbindung stehende Anzeige-Steuervorrichtung 4 über alle Berechtigungen für den Bewegungsmodus M_{B}. Das heißt, der Bewegungsmodus M_{B} der Transportvorrichtung 8 läuft nun in Abhängigkeit des Anzeigemodus M_{A} ab. Als erstes kann mit der Aktivierung des Anzeigemodus M_{A} durch einen Positionssender 18 der Fernbedienung 17 ein Positionssignal an einen Empfänger ausgegeben, wodurch sich in Abhängigkeit dieses ersten Positionssignals die Transportvorrichtung 8 im Bewegungsmodus M_{B} in Richtung Schiedsrichter R bewegt. Dadurch wird eine Grob-Positionierung der Anzeigevorrichtung 3 in der Nähe des Schiedsrichters R und somit im Bereich des auszuführenden Freistoßes erreicht. Dies verhindert zu lange Spielunterbrechungen.

Als nächstes wird im Anzeigemodus M_{A} die Erfassungseinrichtung 14 zum Erfassen der Position P₁₅ des Spielgeräts 15 auf der Sportanlage 2 aktiviert. Hierzu gibt es mehrere Ausführungsvarianten, wobei drei Ausführungsbeispiele im Folgenden näher erläutert werden.

Gemäß einer ersten Variante kann im oder am Spielgerät 15 ein Positionssender vorhanden sein, der mit einem entsprechenden Empfänger die Erfassungseinrichtung 14 bildet. Die Daten über die Position P₁₅ des Positionssenders werden dann von der Erfassungseinrichtung 14 an die Anzeige-Steuervorrichtung 4 übermittelt.

Eine zweite Variante sieht vor, dass die Erfassungseinrichtung 14 ein Spielgeräterkennungssystem aufweist, und beispielsweise über eine separate Kamera die Oberfläche der Sportanlage 2 nach dem Spielgerät 15 absucht. Hierzu kann die Erfassungseinrichtung 14 an der Transportvorrichtung 8 befestigt sein oder aber auch irgendwo im Stadion platziert sein. Sobald die Erfassungseinrichtung 14 das Spielgerät 15 erkannt hat, wird dessen Position P₁₅ an die Anzeige-Steuervorrichtung 4 übermittelt.

Gemäß der dritten und bevorzugten Ausführungsvariante ist vorgesehen, dass in oder an der Fernbedienung 17 ein Positionssender 18 angeordnet ist, der seine Position P₁₇ an einen Empfänger übermittelt. Gemeinsam bilden Sender und Empfänger die Erfassungseinrichtung 14. Der Empfänger kann auch hier bevorzugt an der Transportvorrichtung 8 angeordnet sein. Um nun nicht nur die Position P₁₇ der Fernbedienung 17 zu erfassen, sondern auch die Position P₁₅ des Spielgeräts 15, drückt der Schiedsrichter R in dem Moment auf einen entsprechenden Knopf ("Spielgerätpositionsknopf") der Fernbedienung 17, wenn sich die Fernbedienung 17 auf dem Spielgerät 15 befindet. Dadurch "markiert" der Schiedsrichter R über die Fernbedienung 17 die Position P₁₅ des Spielgeräts 15. Aus der Position P₁₇ der Fernbedienung 17 erfasst die Erfassungseinrichtung 14 somit gleichzeitig die Position P₁₅ des Spielgeräts 15 und übermittelt ein entsprechendes Signal an die Anzeige-Steuervorrichtung 4.

Da nun die Position P₁₅ des Spielgeräts 15 für die Anzeige-Steuervorrichtung 4 bekannt ist, wird der Bewegungsmodus M_{B} (nochmals) aktiv. In diesem Bewegungsmodus M_{B} wird die Transportvorrichtung 8 in Abhängigkeit der erfassten Position P₁₅ des Spielgeräts 15 bewegt. Bevorzugt wird die Transportvorrichtung 8 und im Speziellen die Anzeigevorrichtung 4 an eine Koordinatensystem-Position möglichst exakt senkrecht oberhalb des Spielgeräts 15 bewegt.

Um nun als nächstes die Markierung A mit dem richtigen Abstand um das Spielgerät 15 auf das Spielfeld 22 zu projizieren, sind wiederum zwei Ausführungsvarianten möglich.

Gemäß einer ersten Ausführungsvariante wird zunächst die Distanz D₁₅ zwischen der Anzeigevorrichtung 3 und dem Spielgerät 15 und/oder die Distanz D₂ zwischen der Anzeigevorrichtung 3 und dem Spielfeld 22 ermittelt. Dies kann zum Beispiel über einen Entfernungssensor erfolgen, der in oder an der Anzeigevorrichtung 3 angebracht ist, oder durch Berechnung der Distanz zwischen der Anzeigevorrichtung 3 und der durch den Schiedsrichter R "markierten" Position P₁₅ des Spielgeräts. In Abhängigkeit der gemessenen bzw. berechneten Distanz D₁₅ und/oder der gemessenen Distanz D₂ wird dann der Abstrahlwinkel α der Lichtstrahlen L berechnet. Dazu ist in der Anzeige-Steuervorrichtung 4 ein entsprechender Algorithmus auf Basis des im Speicher 16 gespeicherten Abstands von 9,15 m hinterlegt, sodass durch das Abstrahlen der Lichtstrahlen L in dem berechneten Abstrahlwinkel α ein Kreis mit dem richtigen Kreisradius von 9,15 m um das Spielgerät 15 auf das Spielfeld 22 projiziert wird.

Bevorzugt ist aber eine zweite Ausführungsvariante vorgesehen, gemäß der der Abstrahlwinkel α einmalig eingestellt oder vorprogrammiert wird. Sobald die Anzeige-Steuervorrichtung 4 das Signal über die Position P₁₅ des Spielgeräts 15 erhält, wird die Anzeigevorrichtung 3 in eine voreingestellte Distanz exakt senkrecht oberhalb der Spielgeräts 15 bewegt. Das heißt, immer wenn der Anzeigemodus M_{A} aktiviert wird, wird die Anzeigevorrichtung 3 immer in dieselbe Relativposition zum Spielgerät 15 bewegt. Somit muss auch der Abstrahlwinkel α der Lichtstrahlen L immer derselbe sein, und ein einmaliges Festlegen des Abstrahlwinkels α genügt um immer den Kreis mit dem richtigen Kreisradius von 9,15 m um das Spielgerät 15 auf das Spielfeld 22 zu projizieren.

Um anschließend tatsächlich die Markierung A auf das Spielfeld 22 zu projizieren, wird von der Anzeige-Steuervorrichtung 4 ein entsprechendes Signal 20_{A} an die Anzeigevorrichtung 3 übermittelt, welche sodann die Lichtstrahlen L emittiert.

Wenn nun die Markierung A auf das Spielfeld 22 projiziert ist, sind die Spielteilnehmer angehalten, den angezeigten Abstand zum Spielgerät 15 einzuhalten. Wenn dies nicht rechtzeitig oder in nicht ausreichendem Maß erfolgt, kann der Schiedsrichter R die Spieler zum Beispiel mit einer gelben Karte sanktionieren. Um das Spielgeschehen nicht zu lange zu unterbrechen, kann dem Schiedsrichter R eine zusätzliche Hilfestellung zur Verfügung gestellt werden, indem über die Anzeigevorrichtung 3 ein Countdown von zum Beispiel 5 Sekunden auf das Spielfeld 22 direkt vor die Mauer projiziert wird. Somit kann jeder Spielteilnehmer erkennen, wie lange er noch Zeit hat um den projizierten Abstand einzuhalten.

Um zu verhindern, dass das Spielgerät 15 von einem Spielteilnehmer nach dem Festlegen der Position P₁₅ von dieser Position P₁₅ wegbewegt wird, kann von der Anzeigevorrichtung 3 auch eine Lichtpunkt auf das Spielgerät 15 oder ein kleiner Kreis oder Teilkreis direkt um das Spielgerät 15 herum auf das Spielfeld 22 projiziert werden.

Sobald alle Spielteilnehmer die korrekten Positionen eingenommen haben, kann der Schiedsrichter das Spiel durch einen Pfiff mit seiner Pfeife wieder fortsetzen. Mit der ersten Bewegung des Spielgeräts 15 durch die im Ballbesitz befindliche Mannschaft dürfen sich auch die gegnerischen Spielteilnehmer wieder dem Spielgerät 15 nähern. Mit diesem Fortsetzen des normalen Spielgeschehens kann auch der Anzeigemodus M_{A} wieder deaktiviert werden. Dies kann durch den Schiedsrichter R selbst erfolgen. Da sich aber der Schiedsrichter R nach dem Freistoß wieder auf das Spielgeschehen konzentrieren muss, ist bevorzugt vorgesehen, dass eine andere Person den Anzeigemodus M_{A}, zum Beispiel über eine zweite Fernbedienung 17, deaktiviert. Mit der Deaktivierung des Anzeigemodus M_{A} erhält der Regisseur auch wieder die Kontrolle über den Bewegungsmodus M_{B}. Während dem Anzeigemodus M_{A} hatte der Regisseur aber zumindest die Kontrolle über den Aufnahmemodus M_{F} der Kamera 7.

Die Fernbedienung 17 kann an sich beliebig ausgebildet sein. Für die grundsätzliche Funktionstüchtigkeit sollte aber zumindest eine "Einschaltknopf" und ein "Positionsknopf" vorhanden sein. Mit dem "Einschaltknopf" wird der Anzeigemodus M_{A} aktiviert. Mit dem "Positionsknopf" wird die Position P₁₅ des Spielgeräts 15 wie oben beschrieben markiert. Zusätzlich kann auch noch ein "Ausschaltknopf" vorgesehen sein. Hilfreich ist auch eine auf der Fernbedienung 17 angebrachte Anzeige, über die der Fortschritt bzw. der aktuelle Stand des Anzeigemodus M_{A} erkennbar ist. Beispielsweise kann auch ein Signal - zum Beispiel durch ein Blinken oder durch Vibration - von der Fernbedienung 17 ausgegeben werden, welches dem Schiedsrichter R signalisiert, dass die Markierung A korrekt auf das Spielfeld 22 projiziert ist. Darüber hinaus kann auch noch ein "Countdown-Knopf" vorgesehen sein.

Mit der vorliegenden Erfindung ist somit eine Möglichkeit geschaffen, um auf einfache Art und Weise das Spielgeschehen bei einem Freistoß fairer und vor allem schneller zu gestalten, ohne aufwändige zusätzliche Anzeigevorrichtungen um das Spielfeld herum anbringen zu müssen und ohne den Schiedsrichter in seiner Entscheidungsgewalt zu beschränken. Vielmehr fungieren erfindungsgemäß die ohnehin oft in Stadien eingesetzten Transportvorrichtungen von "fliegenden" Kamerasystemen als oberhalb des Spielfelds bewegbare Träger für eine Freistoßabstandsprojiziervorrichtung (=Anzeigevorrichtung).

### Bezugszeichenliste:

- 1: Vorrichtung
- 2: Sportanlage
- 3: Anzeigevorrichtung
- 4: Anzeige-Steuervorrichtung
- 5: Schnittstelle
- 6: Kamerasystem-Steuervorrichtung
- 7: Kamera
- 8: Transportvorrichtung
- 9: Tragevorrichtung
- 10: Seile
- 11: Stadiondach
- 12: Führungsrollen
- 13: Antriebsvorrichtungen
- 14: Erfassungseinrichtung
- 15: Spielgerät
- 16: Speicher
- 17: Fernbedienung
- 18: Positionssender
- 19: Haltevorrichtung
- 20: Signal
- 21: Kamerasystem
- A: Markierung
- L: Lichtstrahlen
- M_{A}: Anzeigemodus
- M_{B}: Bewegungsmodus
- M_{F}: Aufnahmemodus
- P₁₅: Position des Spielgeräts
- P₁₇: Position der Fernbedienung
- D₂: Distanz zum Spielfeld
- D₁₅: Distanz zum Spielgerät
- R: Schiedsrichter
- α: Abstrahlwinkel

## Patentansprüche

1. Vorrichtung (1) zum Darstellen einer Markierung (A) in Form eines einzuhaltenden Abstands zwischen einem Spielgerät (15), insbesondere eines Fußballs, und Spielteilnehmern auf einem Spielfeld (22) einer Sportanlage (2), mit
- einer Anzeigevorrichtung (3) zum Projizieren von - die Markierung (A) repräsentierenden - Lichtstrahlen (L) auf das Spielfeld (22), wobei die projizierten Lichtstrahlen (L) den einzuhaltenden Abstand anzeigen und zumindest bereichsweise kreisförmig, insbesondere in einem Abstand von 9,15 m, um das Spielgerät (15) auf das Spielfeld (22) projizierbar sind, und
- einer Transportvorrichtung (8), wobei die Anzeigevorrichtung (3) mit der oberhalb der Sportanlage (2) bewegbaren Transportvorrichtung (8) mitbewegbar ist, und
- eine Erfassungseinrichtung (14) zum Erfassen der Position (P₁₅) eines Spielgeräts (15) auf dem Spielfeld (22),
**gekennzeichnet durch**
- eine Anzeige-Steuervorrichtung (4), welche einen Anzeigemodus (M_{A}) aufweist, in dem die Anzeigevorrichtung (3) zur Projektion der Markierung (A) auf das Spielfeld (2) ansteuerbar ist, und welche einen Bewegungsmodus (M_{B}) aufweist, in welchem die Bewegung der Transportvorrichtung (8) oberhalb des Spielfelds (22) steuerbar ist, wobei im Anzeigemodus (M_{A}) über die Anzeigevorrichtung (3) die Lichtstrahlen (L) in Abhängigkeit der über die Erfassungseinrichtung (14) erfassten Position (P₁₅) des Spielgeräts (15) auf das Spielfeld (22) projizierbar sind und wobei im Bewegungsmodus (M_{B}) über die Transportvorrichtung (8) die Anzeigevorrichtung (3) in Abhängigkeit der erfassten Position (P₁₅) des Spielgeräts (15) bewegbar ist.

2. Vorrichtung nach Anspruch 1, **dadurch gekennzeichnet, dass** an der Transportvorrichtung (8) auch eine Kamera (7) zum Filmen eines Fußballspiels auf dem Spielfeld (22), vorzugsweise lösbar, befestigt ist, wobei die Transportvorrichtung (8) und die Kamera (7) ein Kamerasystem (21) bilden und die Anzeigevorrichtung (3) mit diesem Kamerasystem (21) mitbewegbar ist.

3. Vorrichtung nach Anspruch 1 oder 2, **dadurch gekennzeichnet, dass** die Anzeige-Steuervorrichtung (4) eine Schnittstelle (5) zu einer Kamerasystem-Steuervorrichtung (6) des oberhalb des Spielfelds (22) bewegbaren Kamerasystems (21) aufweist.

4. Vorrichtung nach Anspruch 2 oder 3, **dadurch gekennzeichnet, dass** die Transportvorrichtung (8)
- eine Tragevorrichtung (9) für die Kamera (7),
- zumindest zwei, vorzugsweise vier, an der Tragvorrichtung (9) befestigte Seile (10),
- oberhalb des Spielfelds (22), vorzugsweise an einem Stadiondach (11) der Sportanlage (2), befestigte Führungsrollen (12) für die Seile (10) und
- Antriebsvorrichtungen (13) für die Seile (10)
aufweist.

5. Vorrichtung nach einem der Ansprüche 1 bis 4, **dadurch gekennzeichnet, dass** im Bewegungsmodus (M_{B}) über die Transportvorrichtung (8) die an der Kamera (7) oder an der Tragevorrichtung (9) der Transportvorrichtung (8) befestigte Anzeigevorrichtung (3) in Abhängigkeit der erfassten Position (P₁₅) des Spielgeräts (15) bewegbar ist.

6. Vorrichtung nach einem der Ansprüche 1 bis 5, **gekennzeichnet durch** eine, vorzugsweise von einem Schiedsrichter (R) bedienbare, Fernbedienung (17) zum Bedienen der Vorrichtung (1).

7. Vorrichtung nach Anspruch 6, **dadurch gekennzeichnet, dass** die Fernbedienung (17) einen Positionssender (18) aufweist, über welchen die Position (P₁₇) der Fernbedienung (17) auf dem Spielfeld (22) an einen Empfänger der Erfassungseinrichtung (14) signaltechnisch übertragbar ist oder von der Erfassungseinrichtung (14) erfassbar ist.

8. Vorrichtung nach Anspruch 6 oder 7, **dadurch gekennzeichnet, dass**, vorzugsweise nur, über die Fernbedienung (17) die Position (P₁₅) des Spielgeräts (15) auf dem Spielfeld (22) erfassbar ist.

9. Vorrichtung nach einem der Ansprüche 1 bis 5, **dadurch gekennzeichnet, dass** die Erfassungseinrichtung (14) ein Spielgeräterkennungssystem aufweist, wobei über eine separate Kamera des Spielgeräterkennungssystems die Oberfläche der Sportanlage (2) nach dem Spielgerät (15) absuchbar ist.

10. Vorrichtung nach Anspruch 9, **dadurch gekennzeichnet, dass** die separate Kamera der Erfassungseinrichtung (14) an der Transportvorrichtung (8) befestigt ist und mit der Transportvorrichtung (8) oberhalb des Spielfelds (22) bewegbar ist.

11. Verfahren zum Projizieren einer Markierung (A) in Form eines einzuhaltenden Abstands zwischen einem Spielgerät (15), insbesondere eines Fußballs, und Spielteilnehmern auf ein Spielfeld (22) einer Sportanlage (2), insbesondere mit einer Vorrichtung (1) nach einem der Ansprüche 1 bis 10, mit den Schritten:
- Anbringen einer Anzeigevorrichtung (3) an einer oberhalb des Spielfelds (22) bewegbaren Transportvorrichtung (8) und
- Projizieren der die Markierung (A) repräsentierenden Lichtstrahlen (L) durch die an der Transportvorrichtung (8) angebrachte Anzeigevorrichtung (3) zumindest bereichsweise kreisförmig, vorzugsweise in einem Abstand von 9,15 m, um das Spielgerät (15) auf das Spielfeld (22)
**gekennzeichnet durch** die Schritte
- Erfassen der Position (P₁₅) des Spielgeräts (15) mittels einer Erfassungseinrichtung (14) vor dem Projizieren der Lichtstrahlen (L),
- Ansteuern der Anzeigevorrichtung (3) in einem Anzeigemodus (M_{A}) zur Projektion der Markierung (A) auf das Spielfeld (2),
- Ansteuern der Transportvorrichtung (8) in einem Bewegungsmodus (M_{B}), in welchem die Bewegung der Transportvorrichtung (8) oberhalb des Spielfelds (22) gesteuert wird,
- Projizieren der Lichtstrahlen (L) im Anzeigemodus (M_{A}) über die Anzeigevorrichtung (3) in Abhängigkeit der über die Erfassungseinrichtung (14) erfassten Position (P₁₅) des Spielgeräts (15) auf das Spielfeld (22) und
- Bewegen der Anzeigevorrichtung (3) im Bewegungsmodus (M_{B}) über die Transportvorrichtung (8) in Abhängigkeit der erfassten Position (P₁₅) des Spielgeräts (15).

12. Verfahren nach Anspruch 11, **dadurch gekennzeichnet, dass** vor dem Projizieren die Position (P₁₅) des Spielgeräts (15) mittels der Erfassungseinrichtung (14) durch die folgenden Schritte erfasst wird:
- Positionieren einer Fernbedienung (17) durch einen Schiedsrichter (R) auf dem Spielgerät (15),
- Drücken auf einen Knopf der Fernbedienung (17), wenn die Fernbedienung (17) auf dem Spielgerät (15) positioniert ist, und
- durch Drücken des Knopfes ausgelöstes Übertragen der Position (P₁₇) der Fernbedienung (17) über einen die Erfassungseinrichtung (14) mitbildenden Positionssender (18) der Fernbedienung (17) an einen Empfänger der Erfassungseinrichtung (14), wobei die übertragene Position (P₁₇) der Fernbedienung (17) der Position (P₁₅) des Spielgeräts (15) entspricht.

13. Verfahren nach Anspruch 11 oder 12, **dadurch gekennzeichnet, dass** vor dem Projizieren die Transportvorrichtung (8) mitsamt der Anzeigevorrichtung (3) in eine Position, vorzugsweise senkrecht, oberhalb des Spielgeräts (15) bewegt wird, wobei diese Bewegung im Bewegungsmodus (M_{B}) der Anzeige-Steuervorrichtung (4) in Abhängigkeit der erfassten Position (P₁₅) des Spielgeräts (15) erfolgt.

14. Verfahren nach einem der Ansprüche 11 bis 13, **gekennzeichnet durch** die weiteren Schritte:
- Ermitteln der Distanz (D₁₅) zwischen der Anzeigevorrichtung (3) und dem Spielgerät (15),
- Berechnen das Abstrahlwinkels (α) der Lichtstrahlen (L) in Abhängigkeit der erfassten Distanz (D₁₅) und
- Projizieren der Markierung (A) in einem Abstand von 9,15 m um das Spielgerät (15) auf die Sportanlage (2).

15. Verwendung einer oberhalb eines Spielfelds (22) einer Sportanlage (2) angeordneten, bewegbaren Transportvorrichtung (8) für das Anbringen einer Anzeigevorrichtung (3) zum Projizieren von - einer einzuhaltenden Markierung (A) repräsentierenden - Lichtstrahlen (L) auf das Spielfeld (22) der Sportanlage (2), wobei die projizierten Lichtstrahlen (L) zumindest bereichsweise kreisförmig, insbesondere in einem Abstand von 9,15 m, um ein Spielgerät (15) auf das Spielfeld (22) projizierbar sind, wobei vorgesehen sind
- eine Erfassungseinrichtung (14) zum Erfassen der Position (P₁₅) eines Spielgeräts (15) auf dem Spielfeld (22) und
- eine Anzeige-Steuervorrichtung (4), welche einen Anzeigemodus (M_{A}) aufweist, in dem die Anzeigevorrichtung (3) zur Projektion der Markierung (A) auf das Spielfeld (2) ansteuerbar ist, und welche einen Bewegungsmodus (M_{B}) aufweist, in welchem die Bewegung der Transportvorrichtung (8) oberhalb des Spielfelds (22) steuerbar ist, wobei im Anzeigemodus (M_{A}) über die Anzeigevorrichtung (3) die Lichtstrahlen (L) in Abhängigkeit der über die Erfassungseinrichtung (14) erfassten Position (P₁₅) des Spielgeräts (15) auf das Spielfeld (22) projizierbar sind und wobei im Bewegungsmodus (M_{B}) über die Transportvorrichtung (8) die Anzeigevorrichtung (3) in Abhängigkeit der erfassten Position (P₁₅) des Spielgeräts (15) bewegbar ist.

## Claims

1. A device (1) for displaying a marking (A) in the form of a distance to be kept between a game equipment (15), in particular a football, and a participant on a playing field (22) of a sports facility (2), comprising
- a display device (3) for projecting light beams (L) representing the marking (A) onto the playing field (22), wherein the projected light beams (L) display the distance to be kept and can be projected at least in sections in the shape of a circle, in particular at a distance of 9.15 m, around the game equipment (15) on the playing field (22),
- a transport device (8), wherein the display device (3) is jointly movable with the transport device (8) that is movable above the sports facility (2), and
- a detection device (14) for detecting the position (P₁₅) of a game equipment (15) on the playing field (22),
**characterized by**
- a display control device (4) which comprises a display mode (M_{A}) in which the display device (3) can be controlled for projecting the marking (A) onto the playing field (22) and which comprises a movement mode (M_{B}) in which the movement of the transport device (8) above the playing field (22) can be controlled, wherein in the display mode (M_{A}) the light beams (L) can be projected onto the playing field (22) via the display device (3) in dependence of the position (P₁₅) of the game equipment (15) detected by the detection device (14) and wherein in the movement mode (M_{B}) the display device (3) is movable via the transport device (8) in dependence of the detected position (P₁₅) of the game equipment (15).

2. The device according to claim 1, **characterized in that** a camera (7) for filming a football match on the playing field (22) is, preferably detachably, fastened to the transport device (8), wherein the transport device (8) and the camera (7) are forming a camera system (21) and the display device (3) is jointly movable with said camera system (21).

3. The device according to claim 1 or 2, **characterized in that** the display control device (4) comprises an interface (5) to a camera system control device (6) of the camera system (21) movable above the playing field (22).

4. The device according to one of the claims 2 or 3, **characterized in that** the transport device (8) comprises
- a carrier device (9) for the camera (7),
- at least two, preferably four, ropes (10) fastened to the carrier device (9),
- guide rollers (12) for the ropes (10) fastened above the playing field (22), preferably on a roof (11) of a stadium, and
- a drive device (13) for the ropes (10).

5. The device according to one of the claims 1 to 4, **characterized in that** in the movement mode (M_{B}) the display device (3), which is fastened to the camera (7) or to the carrier device (9) of the transport device (8), is movable via the transport device (8) in dependence of the detected position (P₁₅) of the game equipment (15).

6. The device according to one of the claims 1 to 5, **characterized by** a remote control (17) for operating the device (1), the remote control (17) preferably can be operated by a referee (R).

7. The device according to claim 6, **characterized in that** the remote control (17) comprises a position transmitter (18) via which the position (P₁₇) of the remote control (17) on the playing field (22) can be signally transmitted to a receiver of the detection device (14) or can be detected by the detection device (14).

8. The device according to claim 8 or 9, **characterized in that**, preferably only, via the remote control (17) the position (P₁₅) of the game equipment (15) can be detected on the playing field (22).

9. The device according to one of the claims 1 to 5, **characterized in that** the detection device (14) comprises a game equipment detection device, wherein the surface of the sports facility (2) can be searched for the game equipment (15) by way of a separate camera of the game equipment detection device.

10. The device according to claim 9, **characterized in that** the separate camera of the detection device (14) is fastened to the transport device (8) and is jointly movable with the transport device (8) above the playing field (22).

11. A method for projecting a marking (A) in the shape of a distance to be kept between a game equipment (15), in particular a football, and a participant on a playing field (22) of a sports facility (2), in particular with a device (1) according to one of the claims 1 to 10, with the steps:
- mounting a display device (3) on a transport device (8) movable above the playing field (22) and
- projecting of light beams (L) representing the marking (A) at least in sections in the shape of a circle, preferably in a distance of 9.15 m, around the game equipment (15) onto the playing field (22) by the display device (3) which is mounted to the transport device (8)
**characterized by** the steps
- detecting the position (P₁₅) of the game equipment (15) by a detection device (14) before projecting the light beams (L)
- controlling the display device (3) in a display mode (M_{A}) for projecting the marking (A) onto the playing field (22),
- controlling the transport device (8) in a movement mode (M_{B}) in which the movement of the transport device (8) above the playing field (22) is controlled,
- projecting the light beams (L) in the display mode (M_{A}) onto the playing field (22) via the display device (3) in dependence of the position (P₁₅) of the game equipment (15) detected by the detection device (14) and
- moving the display device (3) in the movement mode (M_{B}) via the transport device (8) in dependence of the detected position (P₁₅) of the game equipment (15).

12. The method according to claim 11, **characterized in that** - before the projecting - the position (P₁₅) of the game equipment (15) is detected by the detection device (14) through the following steps:
- positioning a remote control (17) by a referee (R) on the game equipment (15),
- pushing a button of the remote control (17) when the remote control (17) is positioned on the game equipment (15), and
- transmitting the position (P₁₇) of the remote control (17) to a receiver of the detection device (14) via a position transmitter (18) of the remote control (17) jointly forming the detection device (14), transmitting being triggered by pushing the button, wherein the transmitted position (P₁₇) of the remote control (17) corresponds to the position (P₁₅) of the game equipment (15).

13. The method according to claim 11 or 12, **characterized in that** - before projecting - the transport device (8) together with the display device (3) is moved into a position, preferably vertically, above the game equipment (15), wherein this movement is effected in the movement mode (M_{B}) of a display control device (4) in dependence of the detected position (P₁₅) of the game equipment (15).

14. The method according to one of the claims 11 to 13, **characterized by** the further steps:
- determining the distance (D₁₅) between the display device (3) and the game equipment (15),
- calculating the emitting angle (α) of the light beams (L) in dependence of the detected distance (D₁₅) and
- projecting the marking (A) in a distance of 9.15 m around the game equipment (15) onto the sports facility (2).

15. Use of a movable transport device (8) arranged above a playing field (22) of a sports facility (2) for the mounting of a display device (3) for projecting of light beams (L) representing a marking (A) to be kept onto the playing field (22) of the sports facility (2), wherein the projected light beams (L) can be projected at least in sections in the shape of a circle, in particular in a distance of 9,15 m, around a game equipment (15) onto the playing field (22), wherein there is provided
- a detection device (14) for detecting the position (P₁₅) of a game equipment (15) on the playing field (22) and
- a display control device (4) which comprises a display mode (M_{A}) in which the display device (3) can be controlled for projecting the marking (A) onto the playing field (22) and which comprises a movement mode (M_{B}) in which the movement of the transport device (8) above the playing field (22) can be controlled, wherein in the display mode (M_{A}) the light beams (L) can be projected onto the playing field (22) via the display device (3) in dependence of the position (P₁₅) of the game equipment (15) detected by the detection device (14) and wherein in the movement mode (M_{B}) the display device (3) is movable via the transport device (8) in dependence of the detected position (P₁₅) of the game equipment (15).

## Revendications

1. Dispositif (1) de représentation d'un marquage (A) sous la forme d'une distance à respecter entre un engin de jeu (15), en particulier un ballon de football, et des joueurs sur une surface de jeu (22) d'une installation sportive (2), avec
- un dispositif d'affichage (3) pour la projection de rayons lumineux (L) - représentant le marquage (A) - sur la surface de jeu (22), dans lequel les rayons lumineux (L) projetés indiquent la distance à respecter et peuvent être projetés au moins par endroits en forme de cercle, en particulier à une distance de 9,15 m, autour de l'engin de jeu (15) sur la surface de jeu (22), et
- un dispositif de transport (8), dans lequel le dispositif d'affichage (3) peut être déplacé avec le dispositif de transport (8) déplaçable au-dessus de l'installation sportive (2), et
- un dispositif de détection (14) pour la détection de la position (P₁₅) d'un engin de jeu (15) sur la surface de jeu (22),
**caractérisé par**
- un dispositif de commande d'affichage (4) qui présente un mode d'affichage (M_{A}), dans lequel le dispositif d'affichage (3) peut être commandé pour la projection du marquage (A) sur la surface de jeu (2), et qui présente un mode de déplacement (M_{B}), dans lequel le déplacement du dispositif de transport (8) peut être commandé au-dessus de la surface de jeu (22), dans lequel dans le mode d'affichage (M_{A}) les rayons lumineux (L) peuvent être projetés par le dispositif d'affichage (3) en fonction de la position (P₁₅) détectée par le dispositif de détection (14) de l'engin de jeu (15) sur la surface de jeu (22) et dans lequel dans le mode de déplacement (M_{B}) le dispositif d'affichage (3) peut être déplacé par le dispositif de transport (8) en fonction de la position détectée (P₁₅) de l'engin de jeu (15).

2. Dispositif selon la revendication 1, **caractérisé en ce qu'**une caméra (7) est aussi fixée, de préférence de manière détachable, au dispositif de transport (8) pour filmer un match de football sur la surface de jeu (22), dans lequel le dispositif de transport (8) et la caméra (7) forment un système de caméra (21) et le dispositif d'affichage (3) peut être déplacé en même temps avec ce système de caméra (21).

3. Dispositif selon la revendication 1 ou 2, **caractérisé en ce que** le dispositif de commande d'affichage (4) présente une interface (5) à un dispositif de commande de système de caméra (6) du système de caméra (21) mobile au-dessus de la surface de jeu (22).

4. Dispositif selon la revendication 2 ou 3, **caractérisé en ce que** le dispositif de transport (8) présente
- un dispositif porteur (9) pour la caméra (7),
- au moins deux, de préférence quatre, câbles (10) fixés au dispositif porteur (9),
- des rouleaux de guidage (12) fixés au-dessus de la surface de jeu (22), de préférence à un toit de stade (11) de l'installation sportive (2), pour les câbles (10) et
- des dispositifs d'entraînement (13) pour les câbles (10).

5. Dispositif selon l'une des revendications 1 à 4, **caractérisé en ce que** dans le mode de déplacement (M_{B}) le dispositif d'affichage (3) fixé à la caméra (7) ou au dispositif porteur (9) du dispositif de transport (8) peut être déplacé par le dispositif de transport (8) en fonction de la position détectée (P₁₅) de l'engin de jeu (15).

6. Dispositif selon l'une des revendications 1 à 5, **caractérisé par** une télécommande (17) commandable de préférence par un arbitre (R) pour la commande du dispositif (1).

7. Dispositif selon la revendication 6, **caractérisé en ce que** la télécommande (17) présente un émetteur de position (18) par lequel la position (P₁₇) de la télécommande (17) sur la surface de jeu (22) peut être transférée par signal à un récepteur du dispositif de détection (14) ou peut être détectée par le dispositif de détection (14).

8. Dispositif selon la revendication 6 ou 7, **caractérisé en ce que** la position (P₁₅) de l'engin de jeu (15) peut être détectée sur la surface de jeu (22) de préférence seulement par la télécommande (17).

9. Dispositif selon l'une des revendications 1 à 5, **caractérisé en ce que** le dispositif de détection (14) présente un système de reconnaissance d'engin de jeu, dans lequel la surface de l'installation sportive (2) peut être inspectée après l'engin de jeu (15) par une caméra séparée du système de reconnaissance d'engin de jeu.

10. Dispositif selon la revendication 9, **caractérisé en ce que** la caméra séparée du dispositif de détection (14) est fixée au dispositif de transport (8) et peut être déplacée avec le dispositif de transport (8) au-dessus de la surface de jeu (22).

11. Procédé de projection d'un marquage (A) sous la forme d'une distance à respecter entre un engin de jeu (15), en particulier un ballon de football, et des joueurs sur une surface de jeu (22) d'une installation sportive (2), en particulier avec un dispositif (1) selon l'une des revendications 1 à 10, avec les étapes :
- de montage d'un dispositif d'affichage (3) sur un dispositif de transport (8) mobile au-dessus de la surface de jeu (22) et
- de projection des rayons lumineux (L) représentant le marquage (A) par le dispositif d'affichage (3) monté sur le dispositif de transport (8) au moins par endroits en forme de cercle, de préférence à une distance de 9,15 m autour de l'engin de jeu (15) sur la surface de jeu (22)
**caractérisé par** les étapes
- de détection de la position (P₁₅) de l'engin de jeu (15) au moyen d'un dispositif de détection (14) avant la projection des rayons lumineux (L),
- de commande du dispositif d'affichage (3) dans un mode d'affichage (M_{A}) pour la projection du marquage (A) sur la surface de jeu (2),
- de commande du dispositif de transport (8) dans un mode de déplacement (M_{B}), dans lequel le déplacement du dispositif de transport (8) au-dessus de la surface de jeu (22) est commandé,
- de projection des rayons lumineux (L) dans le mode d'affichage (M_{A}) par le dispositif d'affichage (3) en fonction de la position (P₁₅) détectée par le dispositif de détection (14) de l'engin de jeu (15) sur la surface de jeu (22) et
- de déplacement du dispositif d'affichage (3) dans le mode de déplacement (M_{B}) par le dispositif de transport (8) en fonction de la position (P₁₅) détectée de l'engin de jeu (15).

12. Procédé selon la revendication 11, **caractérisé en ce qu'**avant la projection la position (P₁₅) de l'engin de jeu (15) est détectée au moyen du dispositif de détection (14) par les étapes suivantes :
- le positionnement d'une télécommande (17) par un arbitre (R) sur l'engin de jeu (15),
- l'appui sur un bouton de la télécommande (17) lorsque la télécommande (17) est positionnée sur l'engin de jeu (15), et
- la transmission déclenchée par l'appui sur le bouton de la position (P₁₇) de la télécommande (17) par un émetteur de position (18) formant en même temps le dispositif de détection (14) de la télécommande (17) à un récepteur du dispositif de détection (14), dans lequel la position (P₁₇) transmise de la télécommande (17) correspond à la position (P₁₅) de l'engin de jeu (15).

13. Procédé selon la revendication 11 ou 12, **caractérisé en ce qu'**avant la projection le dispositif de transport (8) est déplacé avec le dispositif d'affichage (3) dans une position, de préférence verticale, au-dessus de l'engin de jeu (15), dans lequel ce déplacement dans le mode de déplacement (M_{B}) du dispositif de commande d'affichage (4) est effectué en fonction de la position (P₁₅) détectée de l'engin de jeu (15).

14. Procédé selon l'une des revendications 11 à 13, **caractérisé par** les autres étapes :
- de détermination de la distance (D₁₅) entre le dispositif d'affichage (3) et l'engin de jeu (15),
- de calcul de l'angle de rayonnement (α) des rayons lumineux (L) en fonction de la distance (D₁₅) détectée et
- de projection du marquage (A) à une distance de 9,15 m autour de l'engin de jeu (15) sur l'installation sportive (2).

15. Utilisation d'un dispositif de transport (8) mobile, agencé au-dessus d'une surface de jeu (22) d'une installation sportive (2) pour le montage d'un dispositif d'affichage (3) pour la projection de rayons lumineux (L) - représentant un marquage (A) à respecter - sur la surface de jeu (22) de l'installation sportive (2), dans laquelle les rayons lumineux (L) projetés peuvent être projetés au moins par endroits en forme de cercle, en particulier à une distance de 9,15 m, autour d'un engin de jeu (15) sur la surface de jeu (22), dans laquelle sont prévus
- un dispositif de détection (14) pour la détection de la position (P₁₅) d'un engin de jeu (15) sur la surface de jeu (22) et
- un dispositif de commande d'affichage (4) qui présente un mode d'affichage (M_{A}), dans lequel le dispositif d'affichage (3) peut être commandé pour la projection du marquage (A) sur la surface de jeu (2), et qui présente un mode de déplacement (M_{B}), dans lequel le déplacement du dispositif de transport (8) peut être commandé au-dessus de la surface de jeu (22), dans lequel dans le mode d'affichage (M_{A}) les rayons lumineux (L) peuvent être projetés par le dispositif d'affichage (3) en fonction de la position (P₁₅) détectée par le dispositif de détection (14) de l'engin de jeu (15) sur la surface de jeu (22) et dans lequel dans le mode de déplacement (M_{B}) le dispositif d'affichage (3) peut être déplacé par le dispositif de transport (8) en fonction de la position (P₁₅) détectée de l'engin de jeu (15).
